(19) Europäisches Patentamt
European Patent Office
Office européen des brevets

(11) Publication number: **0 331 644 B1**

## (12) EUROPEAN PATENT SPECIFICATION

(45) Date of publication of patent specification :
**18.09.91 Bulletin 91/38**

(51) Int. Cl.⁵ : **B60H 1/28, B62D 25/08**

(21) Application number : **89830052.0**

(22) Date of filing : **14.02.89**

(54) A bodywork element for motor vehicles and a body including such an element.

(30) Priority : **02.03.88 IT 6716488**

(43) Date of publication of application :
**06.09.89 Bulletin 89/36**

(45) Publication of the grant of the patent :
**18.09.91 Bulletin 91/38**

(84) Designated Contracting States :
**DE ES FR GB SE**

(56) References cited :
**FR-A- 1 339 569**
**FR-A- 2 445 776**
**US-A- 4 521 050**

(73) Proprietor : **FIAT AUTO S.p.A.**
**Corso Giovanni Agnelli 200**
**I-10135 Torino (IT)**

(72) Inventor : **Mastrazzo, Carlo**
**Via Filadelfia, 149**
**I-10137 Torino (IT)**
Inventor : **Bertoldi, Giancarlo**
**Via Onorato Vigliani, 4**
**I-10135 Torino (IT)**

(74) Representative : **Bosotti, Luciano et al**
**c/o Jacobacci-Casetta & Perani S.p.A. Via**
**Alfieri, 17**
**I-10121 Torino (IT)**

## Description

The present invention relates in general to the bodywork of motor vehicles and particularly concerns a bodywork element for motor vehicles which is intended to be mounted in a bonnet region of the body in which are provided :

a lid which can be tilted into a generally closed position on the bonnet region, and

a wall which defines within the bonnet region a space for the intake of air to the passenger compartment of the body.

In current solutions, gaskets must generally be provided on the upper edges of these walls, which constitute a sort of bulkhead for separating the air-intake chamber or space from the rest of the bonnet compartment where the engine of the motor vehicle is usually mounted, to ensure a good seal against the lower face of the bonnet lid in order to prevent the passage of fumes, vapours and smells from the engine compartment to the air-intake chamber with consequent diffusion into the passenger compartment.

Since the clearance to be taken up (the distance between the upper edge of the separating bulkhead and the lower face of the bonnet lid) may vary greatly from one point to another — and even from one vehicle to another — it is generally necessary to fit gaskets which have a complex geometry and are rather bulky. Moreover, since these gaskets are visible when the bonnet lid is open, they must have an acceptable aesthetic appearance and must not deteriorate with time.

More specifically, the present invention relates to a bodywork element having the features set forth in the pre-characterising portion of Claim 1, which is known, e.g. from FR-A-1339569.

The object of the present invention is to produce a bodywork element which can remedy the problems described above.

According to the present invention, this object is achieved by virtue of a bodywork element of the type specified above, having the further features set forth in Claim 1.

In other words, in the solution according to the invention, the air-intake chamber is isolated from the engine compartment by virtue of a laminar element which extends from the lower edge of the windscreen until it joins the wall which divides the air-intake space (chamber) from the engine compartment. The component according to the invention preferably carries an associated gasket for sealing relative to the wall. The gasket may be made to quite loose tolerances and is not subject to deformation and consequent wear each time the bonnet lid is raised and lowered ; moreover, since it is not in view, it does not have to satisfy particular aesthetic requirements.

The invention also concerns a motor vehicle body including an element of the type specified above.

The invention will now be desired, purely by way of non-limiting example, with reference to the appended drawings, in which :

Figure 1 shows the arrangement in which an element according to the invention is mounted on a motor vehicle body, with some parts removed to simplify the illustration,

Figure 2 is a view which corresponds approximately to that of Figure 1 and shows the general appearance of a motor vehicle body provided with an element according to the invention,

Figure 3 is a view of the element according to the invention seen in isolation, on an enlarged scale, and

Figure 4 is a section taken on the line IV-IV of Figure 3, shown on an even larger scale.

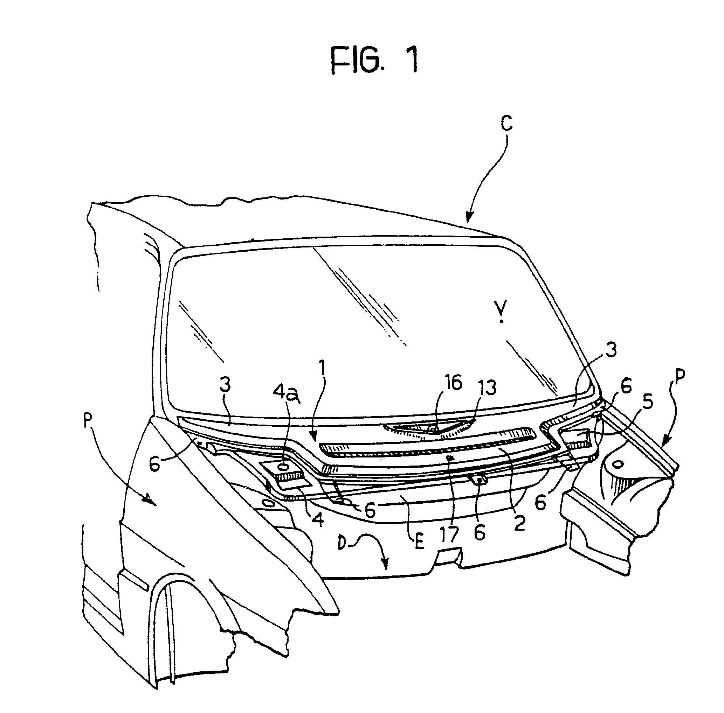

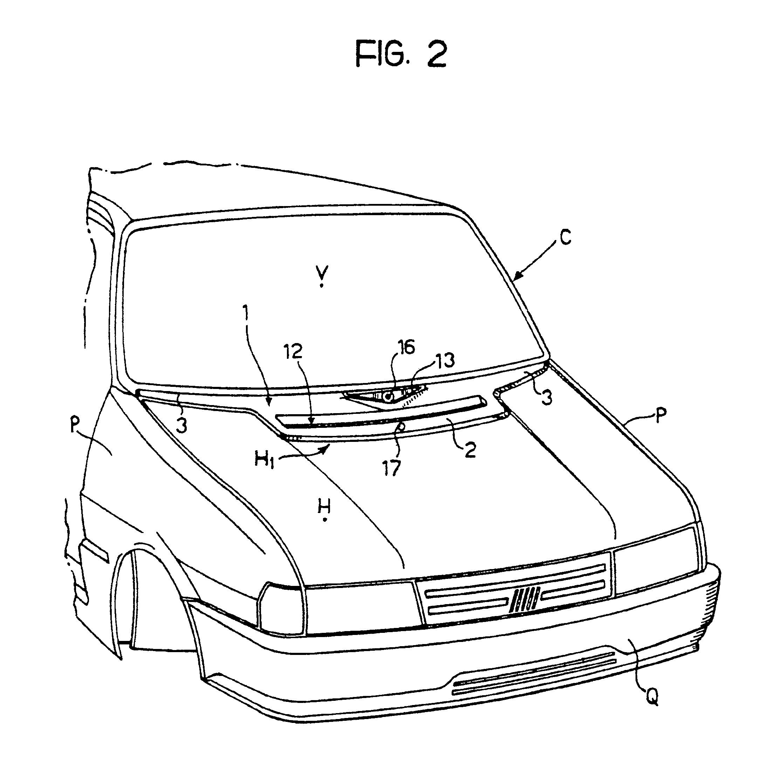

Figures 1 and 2 show the front part of the body C of a motor vehicle (not visible as a whole), in which can be seen a bonnet region D which is generally contained between the two front wings P, the front valance-bumper unit Q and the lower edge of the windscreen V.

The bonnet compartment is closed at the top by a lid H (not shown in Figure 1) which can be tilted into the closed position shown in Figure 2 so as completely to close the bonnet space D.

According to a known solution, there is a wall or bulkhead E within the bonnet compartment D, which extends at a certain distance (10-20 cm) from the lower edge of the windscreen V so as to define within it a space (chamber) for the intake of air which is intended to be diffused into the passenger compartment of the vehicle to ensure its ventilation. A heat exchanger (not visible in the drawings) is generally provided within the intake chamber defined by the wall E, through which the engine-cooling liquid flows to enable the heating of the ventilation air introduced into the passenger compartment.

It is clear that the air which is taken in for subsequent diffusion within the passenger compartment must not be contaminated by fumes, vapours and smells coming from the front part of the bonnet compartment D where the engine of the motor vehicle is usually mounted.

For this purpose, in the solution according to the invention, the intake chamber defined by the wall E is closed at its top by an element 1 which is similar in theory to an extension of the frame element (the so-called scuttle) which extends along the lower edge of the windscreen V.

The element 1, which is usually made from moulded plastics material, is generally crescent-shaped with a concave rear edge (in the normal direction of travel of the vehicle) which extends along the lower edge of the windscreen V so as to be covered, at least partly, by the weather strip situated along that edge, and a generally convex front edge. The front edge in question has a central section which projects for-

2

wards to define, within the element 1, a central part 2 intended to cover the air-intake chamber and two side wings 3 which extend towards the lateral roof pillars of the body.

According to the solution illustrated, the convex or front edge of the element 1 (and particularly the section thereof which defines the central part 2) extends forwards so as to form a sort of appendage which penetrates the lid H when the lid H is in the closed position (Figure 2). The latter is provided with a sort of central notch, indicated $H_1$ in Figure 1, which is complementary in shape to the central part 2 of the element 1.

Consequently, according to the terminology adopted in the description below and in the claims which follow, the element 1 is intended to extend in a substantially adjacent and coplanar relationship with the lid H when the latter is in its closed position.

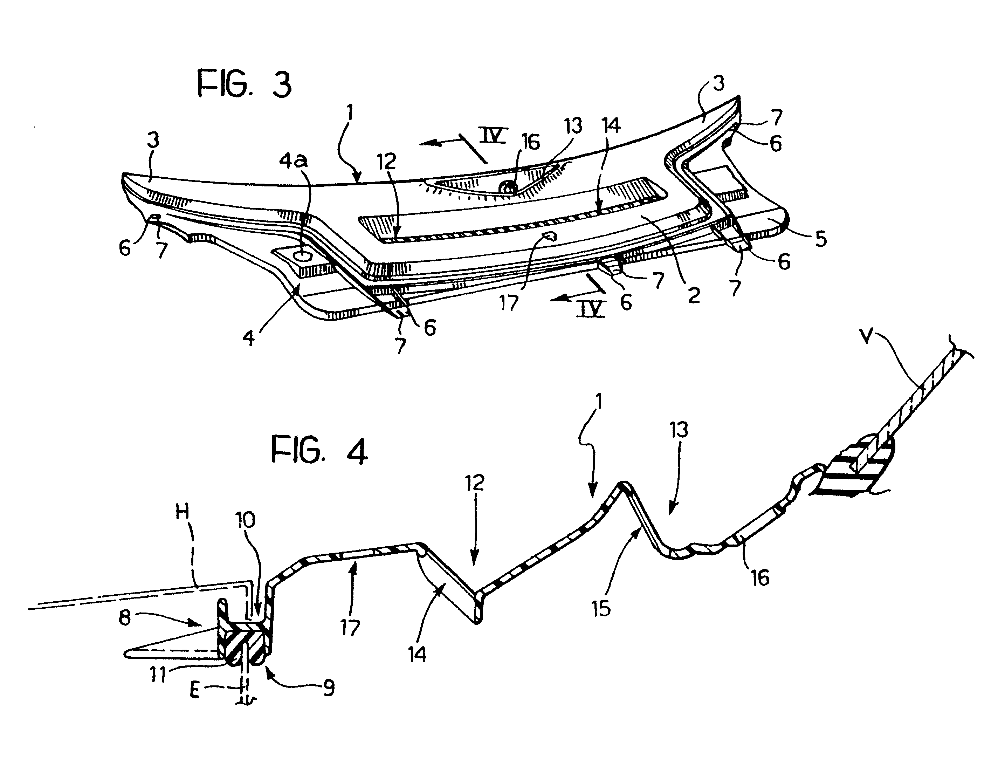

Whilst it follows the profile of the bulkhead E and therefore the profile of the inner edge (relative to the bodywork) of the lid H, the element 1 may have appendages, indicated 4 and 5 in Figures 1 and 3, which are intended to project forwardly of the wall E so as to act as bracket-like support formations or as covering elements.

For example, in the embodiment illustrated, the appendage 4 is intended to extend into the bonnet compartment to cover the reservoir (not illustrated) for the windscreen-washing liquid. For this purpose, the appendage 4 is provided with an aperture 4a (possibly closed by a plug, not shown) which enables access to the filler pipe of this reservoir.

The element 1 is usually fixed to the body of the bodywork C by screws. For this purpose, the body 1 is provided with further appendages or lugs 6 (Figure 3) in which corresponding apertures 7 are provided for the passage of the screws for fixing it to the body of the bodywork. These lugs and apertures are usually provided both in the central part 2 and in the side wings 3 of the element 1.

The section of Figure 4 shows the complex H-shaped conformation of the front edge, indicated 8, of the element 2.

This conformation is approximately comparable to an H-shape with a lower channel cavity 9 intended to face towards the upper edge of the wall E and an upper channel cavity 10.

A gasket 11 is housed in the lower cavity 9 (usually fitted to the element 1 during the manufacturing and finishing process of the latter) and is intended to surround the upper edge of the wall E so as to ensure that the air-intake chamber is sealed from the engine compartment.

Just as the lower cavity 9 (with the gasket 11 situated therein) extends along a line complementary to the line along which the upper edge of the wall E extends, the upper cavity 10 extends along a line which is complementary to the line along which the rear edge (still in the normal direction of travel of the vehicle) of the bonnet lid H extends.

This rear edge, schematically illustrated by a broken line, is intended to penetrate the cavity 10 when the lid H is brought into the closed position, as schematically illustrated in Figure 4.

The insertion of a seal between the rear edge of the lid H and the cavity 10, although possible in some situations of use, is not strictly necessary, it being sufficient, for example, to place anti-vibration masses (rubbers) in the cavity 10 to prevent the rear edge of the lid H from hitting the rigid material of the element 1 and causing noise as a result of the vibrations generated when the vehicle is in motion, or even as a result of the operation of the engine alone.

Still with reference to Figure 4, it can be seen that, as a whole, the element 1 extends as a continuation of the lid H when the latter is in the closed position, forming an aerodynamic junction with the bottom of the windscreen V.

Naturally, since the element 1 closes the air-intake chamber, it is necessary to provide openings therein for the passage of air.

These are preferably provided in two zones 12, 13 which are generally recessed or set into the external surface of the element 1.

The zone 12 (see particularly Figure 3) extends in a substantially straight line across the greater part of the central zone 2 of the element 1.

The zone 13, however, is triangular or V-shaped and is situated adjacent the rear edge of the element 1 (that is, near the lower edge of the windscreen V) in the central part of the element 1.

A first row of slots provided in the element 1, along the whole of the recessed zone 12, is indicated 14.

As can better be seen in the section of Figure 4, the recessed zone 12 has an approximately triangular shape in section with a smaller side situated in a forward position (with respect to the normal direction of travel of the vehicle). The slots 14 are provided exactly in correspondance with this smaller side : the slots 14 are therefore situated, so to speak, on an opposite slope with respect to the general lie of the element 1.

In other words, whilst the element 1, which is interposed between the rear edge of the lid H and the lower edge of the windscreen V, "rises" generally towards the windscreen V, the slots 14 "descend" with their upstream ends (in the direction of travel of the vehicle) in a higher position than their downstream ends.

This particular arrangement of the slots 14 has been shown to be preferable for assisting the flow of air into the intake chamber through the element 1.

The slots 15 provided along the front edges of the V which delimits the recessed zone 13 have a substantially similar arrangement.

A hole 16 is provided in the downstream side of the recessed zone 13 for the passage of the shaft for operating the windscreen-wiper blade which acts on the windscreen V.

Still in a central position with respect to the element 1, a further aperture 17 is provided between the front edge 8 and the recessed zone 12 for enabling the mounting (usually by means of a snap-arrangement) of a sprayer (not illustrated, since it is widely known) for enabling the windscreen V to be sprayed with a detergent liquid.

## Claims

1. A bodywork element for motor vehicles, which is intended to be mounted on a bonnet region (D) of the body (C) in which are provided :
a lid (H) which can be tilted into a generally closed position on the bonnet region (D),
a wall (E) which defines, within the bonnet region (D), a space for the intake of air to the passenger compartment of the body, and
a generally laminar body (1) with a peripheral profile (8) which is complementary to the wall (E) so that the body (1) can be mounted as a cover for the intake space, in a substantially adjacent and coplanar relationship with the lid (H) in its closed position, characterised in that :
the element is provided with apertures (14, 15) for the intake of air to the space, which apertures (14, 15) are located, at least in part, in at least one recessed portion (12, 13) of the element (1),
the apertures (14, 15) extend, at least in part, on an opposite slope with respect to the general slope of the element (1), and
the element comprises a first recessed portion (13) having an aperture (16) for the mounting of a windscreenwiper, and further apertures (15) for the intake of air into the space, and at least one second recessed portion (12) also provided with apertures (14) for the intake of air into the space.

2. A bodywork element according to Claim 1, characterised in that the peripheral profile (8) carries an associated gasket (12) for sealing with respect to the wall (E).

3. A bodywork element according to Claim 1 to Claim 2, characterised in that the peripheral profile (8) has a region (10) which is generally complementary in shape to the lid.

4. A bodywork element according to any one of the preceding Claims, which is intended to be mounted adjacent the lower edge of one of the windows (V) of the passenger compartment of the body, characterised in that it is generally crescent-shaped with an inner concave edge having a shape complementary to the shape of the said lower edge and an outer convex edge having a shape complementary to the shape of the said wall (E).

5. A motor vehicle body comprising a bonnet region (D) with a lid (H) which can be tilted into a generally closed position on the bonnet region (D) and a wall (E) which defines, within the bonnet region (D), a space for the intake of air towards the passenger compartment of the body, characterised in that it includes an element according to any one of Claims 1 to 4 mounted to cover the air-intake space, in a substantially adjacent and coplanar relationship with the lid (H) in its closed position.

6. A motor vehicle body according to Claim 5, characterised in that the element (1) and the lid (H) have complementary edge portions (8) defining an appendage of the element (1) which penetrates the lid (H) when the latter is in the closed position.

## Patentansprüche

1. Karosserieelement für Kraftfahrzeuge, das für die Montage im Motorhaubenbereich (D) der Karosserie (C) bestimmt ist, in dem vorgesehen sind :
eine Haube (H), die in eine im wesentlichen geschlossene Position über dem Motorhaubenbereich (D) geschwenkt werden kann,
eine Wand (E), die in dem Motorhaubenbereich (D) eine Kammer für den Lufteintritt zu dem Fahrgastraum der Karosserie begrenzt, und
ein im wesentlichen laminarer Körper (1), der ein zu der genannten Wand (E) komplementäres Umlaufprofil (8) besitzt, so daß der Körper (1) so montiert werden kann, daß er eine Abdeckung für die Lufteintrittskammer bildet und sich in einer im wesentlichen an die Haube (H) angrenzenden und zu dieser koplanaren Anordnung befindet, wenn die Haube (H) ihre geschlossene Position einnimmt, dadurch gekennzeichnet,
daß das Karosserieelement Öffnungen (14, 15) für den Lufteintritt in die genannte Kammer aufweist, diejenigen Öffnungen zumindest teilweise in wenigstens einem vertieften Abschnitt (12, 13) des Elements (1) liegen,
daß die Öffnungen (14, 15) sich zumindest teilweise auf einem Bereich mit im Vergleich zu der allgemeinen Neigung des Elements (1) entgegengesetzter Neigung erstrecken,
und daß das Element einen ersten vertieften Abschnitt (13) mit einer Öffnung (16) zur Montage eines Scheibenwischers und weiteren Öffnungen (15) für den Lufteintritt in die Kammer aufweist sowie wenigstens einen zweiten vertieften Abschnitt (12), der ebenfalls mit Öffnungen (14) für den Lufteintritt in die Kammer versehen ist.

2. Karosserieelement nach Anspruch 1, dadurch gekennzeichnet, daß das Umlaufprofil (8) eine Dichtung (12) zur Abdichtung gegenüber der Wand (E) trägt.

3. Karosserieelement nach Anspruch 1 oder 2, dadurch gekennzeichnet, daß das Umlaufprofil (8) einen Abschnitt (10) aufweist, dessen Form zur Haube im wesentlichen komplementär ist.

4. Karosserieelement nach einem der vorhergehenden Ansprüche für die Montage im Nachbarbereich der Unterkante eines der Fenster (V) des Fahrgastraums der Karosserie, dadurch gekennzeichnet, daß es eine im wesentlichen sichelartige Form hat und eine innere konkave Kante besitzt, deren Form zu der Form der genannten Unterkante komplementär ist, und eine äußere konvexe Kante, deren Form zu der der genannten Wand (E) komplementär ist.

5. Kraftfahrzeugkarosserie mit einem Motorhaubenbereich (D) mit einer Haube (H), die in eine im wesentlichen geschlossene Position auf dem Motorhaubenbereich geschwenkt werden kann, und einer Wand (E), die in dem Motorhaubenbereich (D) eine Kammer für den Lufteintritt in den Fahrgastraum der Karosserie begrenzt, dadurch gekennzeichnet, daß sie ein Element nach einem der Ansprüche 1 bis 4 aufweist, das so montiert ist, daß es die Lufteintrittskammer abdeckt und sich in einer im wesentlichen an die Haube (H) angrenzenden und zu dieser koplanaren Anordnung befindet, wenn die Haube (H) ihre geschlossene Position einnimmt.

6. Kraftfahrzeugkarosserie nach Anspruch 5, dadurch gekennzeichnet, daß das Element (1) und die Haube (H) komplementäre Kantenabschnitte (8) besitzen, die einen Ansatz des Elements (1) begrenzen, der in die Haube (H) eindringt, wenn diese sich in ihrer geschlossenen Position befindet.

**Revendications**

1. Elément de carrosserie pour véhicules automobiles, qui est destiné à être monté dans une région (D) du moteur de la carrosserie (C), dans laquelle sont prévus :
un capot (H) qui peut être rabattu dans une position générale fermée sur la région (D) du moteur,
une paroi (E) qui définit, dans la région (D) du moteur, un espace pour l'entrée d'air menant à l'habitacle de la carrosserie, et
un élément (1) de forme générale laminaire, présentant un profil périphérique (8) qui est complémentaire de la paroi (E), de sorte que l'élément (1) peut être monté en qualité de couvercle pour l'espace d'entrée d'air, dans une position sensiblement adjacente et coplanaire au capot (H) dans sa position fermée, caractérisé en ce que l'élément est muni d'ouvertures (14, 15) pour l'entrée d'air dans l'espace, lesquelles ouvertures (14, 15) sont placées, au moins en partie, dans au moins une partie déprimée (12, 13) de l'élément (1),
les ouvertures (14, 15) s'étendent, au moins en partie, sur la pente qui est à l'inverse de la pente générale de l'élément (1), et
l'élément comprend une première partie déprimée (13) présentant une ouverture (16) pour le montage d'un essuie-glace, et d'autres ouvertures (15) pour l'entrée d'air dans l'espace, et au moins une deuxième partie déprimée (12), elle aussi munie d'ouvertures (14) pour l'entrée d'air dans l'espace.

2. Elément de carrosserie selon la revendication 1, caractérisé en ce que le profil périphérique (8) porte une garniture d'étanchéité (12) correspondante pour former un joint étanche avec la paroi (E).

3. Elément de carrosserie selon la revendication 1 ou la revendication 2, caractérisé en ce que le profil périphérique (8) possède une région (10) qui est de forme générale complémentaire de celle du capot.

4. Elément de carrosserie selon une quelconque des revendications précédentes, qui est destiné à être monté adjacent au bord inférieur de l'une des fenêtres (V) de l'habitacle de la carrosserie, caractérisé en ce qu'il présente la forme générale d'un croissant, avec un bord concave intérieur ayant une forme complémentaire de celle dudit bord inférieur, et un bord extérieur convexe ayant une forme complémentaire de la forme de ladite paroi (E).

5. Carrosserie de véhicule automobile comprenant une région de moteur (D) munie d'un capot (H) qui peut être rabattu dans une position générale fermée sur la région (D) du moteur, et une paroi (E) qui définit, dans la région (D) du moteur, un espace pour l'entrée d'air dirigé vers l'habitacle de la carrosserie, caractérisée en ce qu'elle comprend un élément selon une quelconque des revendications 1 à 4, monté pour recouvrir l'espace d'entrée d'air, dans une position sensiblement adjacente et coplanaire à celle du capot (H) dans sa position fermée.

6. Carrosserie de véhicule automobile selon la revendication 5, caractérisée en ce que l'élément (1) et le capot (H) présentent des parties de bord complémentaires (8) qui définissent une saillie de l'élément (1) qui pénètre dans le capot (H) lorsque ce dernier est dans sa position fermée.

# FIG. 1

# FIG. 2

FIG. 3

FIG. 4